# EUROPÄISCHE PATENTSCHRIFT

(11) **EP 1 388 486 B1**
(45) Veröffentlichungstag und Bekanntmachung des Hinweises auf die Patenterteilung: **13.10.2010**
(21) Anmeldenummer: 03017777.8
(22) Anmeldetag: 04.08.2003
(51) Int. Cl.: B62D 25/08

(54) **Fahrzeugkarosserie**
Motor vehicle body
Carrosserie de véhicule automobile

(30) Priorität: 09.08.2002 DE 10236614; 17.12.2002 DE 10258890
(43) Veröffentlichungstag der Anmeldung: 11.02.2004
(73) Patentinhaber: Bayerische Motoren Werke Aktiengesellschaft, 80809 München (DE)
(72) Erfinder: Schubert, Werner, 80807 München (DE); Oancea, Nikolaus, 85757 Karlsfeld (DE); Muench, Anton, 83646 Arzbach (DE); Scheer, Jürgen, 81377 München (DE); Meinerling, Theodor, 85084 Reichertshofen (DE); Pflanz, Gero, Dr., 80807 München (DE); Mederer, Christian, 80636 München (DE); Wiedemann, Ulrich, 85604 Zorneding (DE)

(56) Entgegenhaltungen:
- EP-A- 0 733 540
- EP-A- 1 209 062
- DE-A- 19 928 588
- US-A- 4 950 026
- US-A- 5 074 587
- US-A- 5 411 311
- US-A- 6 016 603
- US-B1- 6 336 349

## Beschreibung

Die Erfindung betrifft eine Fahrzeugkarosserie gemäß des Oberbegriffs des Patentanspruchs 1 oder des Patentanspruchs 3.

Allgemein bekannt ist eine sogenannte Domstrebe, die bei Personenkraftwagen vorne die beiden Federdome miteinander verbindet, und so die Steifigkeit der Karosserie des Personenkraftwagens erhöht. Derartige Domstreben werden insbesondere bei sportlichen Cabrios verbaut, da bei diesen Fahrzeugen keine geschlossene Fahrgastzelle zur Versteifung der Karosserie beiträgt.

Aus der US 5,074,587 A ist bereits eine Fahrzeugkarosserie mit seitlichen Schwellern und einem Vorderbau mit zumindest zwei Motorträgern bekannt, zwischen denen ein Vorderachsträger angebracht ist. Zwischen den vorderen Endabschnitten der beiden Schweller und dem mittleren Bereich des Vorderachsträgers erstreckt sich jeweils eine Strebe.

Ferner ist aus der DE 92 07 011 U1 eine Domstrebe mit an beiden Strebenenden vorgesehenen Stützorganen für die Befestigung an der Karosserie bekannt. Zwischen jedem Stützorgan und dem damit verbundenen Strebenende ist ein Kugelgelenk eingesetzt.

Aufgabe der Erfindung ist es, eine Fahrzeugkarosserie, insbesondere für ein Cabrio oder einen Pickup, zu schaffen, die eine besonders hohe Steifigkeit aufweist.

Diese Aufgabe wird durch die Merkmale des Patentanspruchs 1 und / oder des Patentanspruchs 3 gelöst.

Gemäß Patentanspruch 1 weist die Fahrzeugkarosserie seitliche Schweller und einen Vorderbau mit zumindest zwei seitlichen Stützträgern und zwei Motorträgern auf, zwischen denen ein Vorderachsträger angebracht ist. Darüber hinaus weist der Vorderbau einen Querträger auf, der im Bereich einer Stirnwand angeordnet ist. Zwischen den vorderen Endabschnitten der beiden Schweller und dem mittleren Bereich des Vorderachsträgers erstreckt sich jeweils eine Zug-Druckstrebe, um die Steifigkeit der Fahrzeugkarosserie zu erhöhen. Zwischen den Stützträgern im Bereich der Federdome und dem mittleren Bereich des Querträgers erstreckt sich jeweils eine Zug-Druckstrebe, um die Steifigkeit der Fahrzeugkarosserie zu erhöhen. Der Querträger dient vor allem zur Versteifung der Karosserie und verläuft im Wesentlichen in Fahrzeugquerrichtung. Er kann sich als Windlaufquerträger zwischen zwei A-Säulen erstrecken und zugleich zur Befestigung einer Windschutzscheibe dienen. Er kann aber auch die Motorträger, oder die seitlichen Schweller miteinander entlang der Stirnwand verbinden.

Vorteilhafterweise erstreckt sich zwischen den Stützträgern im Bereich eines Federdomes und dem mittleren Bereich des Vorderachsträgers jeweils eine Zug-Druckstrebe, um die Steifigkeit der Fahrzeugkarosserie zu erhöhen. Die Stützträger dienen zur Befestigung und / oder zur Auflage von Beplankungsteilen, wie zum Beispiel von vorderen Kotflügeln oder einer Motorhaube. Typischerweise erstrecken sich solche Stützträger im Wesentlichen in Fahrzeuglängsrichtung zumindest zwischen einer A-Säule oder einer Stirnwand und einem Federdom für die Vorderachse.

Gemäß Patentanspruch 3 weist die Fahrzeugkarosserie seitliche Schweller und einen Vorderbau auf, der einen Motor aufnimmt. Von jedem Bereich eines Federdoms und von den vorderen Endabschnitten der Schweller verläuft jeweils eine Zug-Druckstrebe zu einem gemeinsamen Knotenpunkt hin, der mittig im Bereich vor dem Motor angeordnet ist. Bei dieser Anordnung ist keine Anbindung mehr an den Vorderachsträger erforderlich. Die versteifende Wirkung wird dadurch kaum abgeschwächt. Damit ist auch eine Anwendung der versteifenden Zug-Druckstreben bei Karosserien möglich, bei denen entweder kein steif mit der Karosserie verbundener Vorderachsträger existiert, die Position des Vorderachsträgers ungünstig für die Anbindung der Zug-Druckstreben ist, oder eine Anbindung aus anderen Gründen, wie Bauraum oder Kosten, nicht möglich ist.

Zusätzlich kann sich zwischen den beiden Bereichen der Federdome eine Zug-Druckstrebe erstrecken. Die Zug-Druckstrebe kann sich beispielsweise zwischen den beiden Stützträgern im Bereich der Federdome oder zwischen den beiden Federdomen direkt erstrecken, wie es bereits aus dem Stand der Technik bekannt ist.

Desweiteren kann eine zusätzliche Zug-Druckstrebe zwischen den vorderen Endabschnitten der beiden Schweller in Fahrzeugquerrichtung verlaufen. In Kombination mit den anderen Zug-Druckstreben erhöht sich so die Steifigkeit des Vorderbaus noch zusätzlich.

Eine Zug-Druckstrebe im Sinne dieser Erfindung kann vor allem Zug- und Druckkräfte aufnehmen. Sie ist für Biegebeanspruchungen kaum geeignet. Typischerweise kann eine solche Zug-Druckstrebe aus einem geschlossenen Hohlprofil, wie beispielsweise einem Rohr bestehen. Aber auch der Einsatz von Vollprofilen ist möglich. Um entsprechend hohe Belastungen aufnehmen zu können, bestehen die Zug-Druckstreben bevorzugt aus einem metallischen Werkstoff. Sie können beispielsweise als Strangpressprofil, als gerolltes Rohr, aber auch als Blechbauteil ausgeführt sein.

Durch die Zug-Druckstreben erhöht sich die Steifigkeit des Vorderbaus, und die eingeleiteten Kräfte verteilen sich auch über die Zug-Druckstreben. Dadurch reduziert sich die Belastung im eigentlichen Vorderbau, sodass der Vorderbau ein geringeres Strukturgewicht haben kann, was wiederum mit geringeren Kosten einhergeht. Insbesondere die Verbindungsbereiche zwischen Längs- und Querträgern werden aufgrund der diagonal verlaufenden Zug-Druckstreben entlastet. Ohne die Zug-Druckstreben würden an den Verbindungsbereichen wesentlich höhere Biege- und Torsionsmomente entstehen, sodass die Verbindungsbereiche sehr steif und damit sehr groß und schwer gestaltet werden müssten. Durch den Einsatz der Zug-Druckstreben können diese Verbindungsbereiche filigraner gehalten werden.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die Figuren zeigen in schematischer Darstellungsweise:
- Fig. 1: eine perspektivische Darstellung einer Fahrzeugkarosserie und
- Fig. 2: eine Seitenansicht der Fahrzeugkarosserie aus Fig. 1.

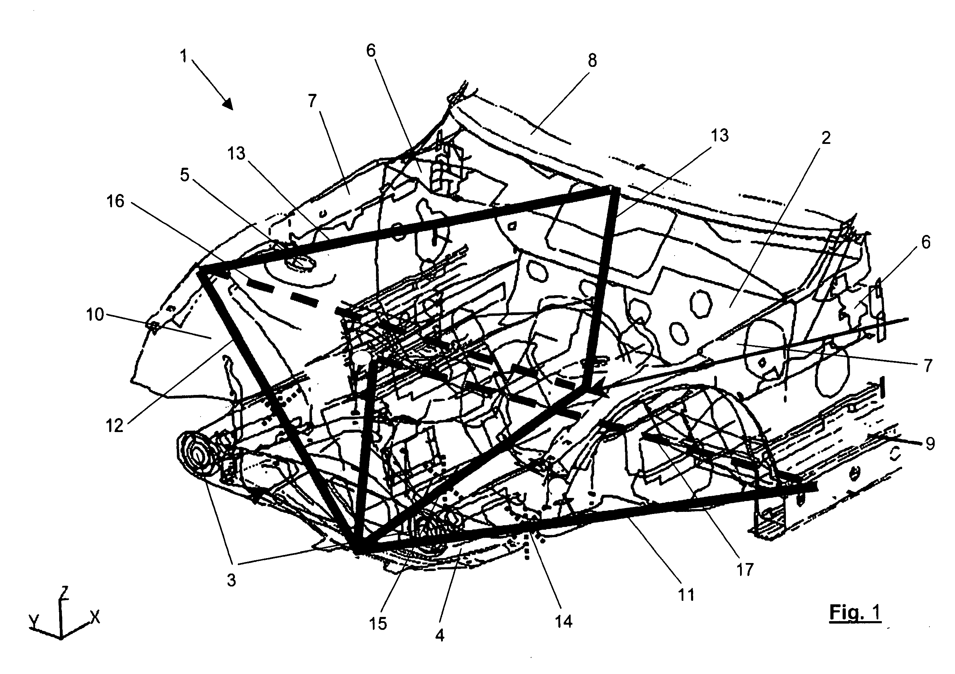

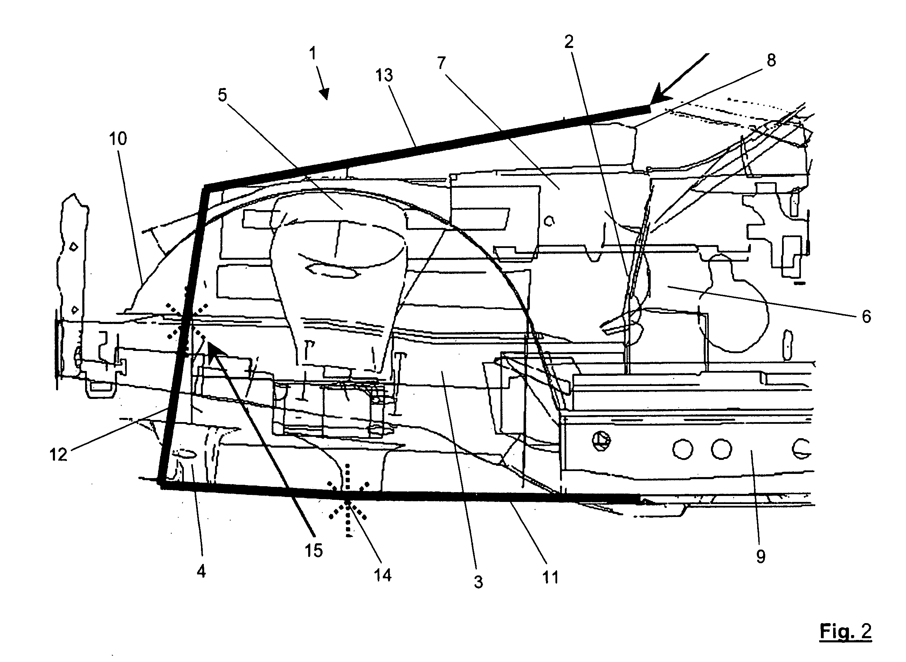

Fig. 1 und Fig. 2 zeigen einen Vorderbau 1 einer selbsttragenden Karosserie eines Cabrios. Der Vorderbau 1 weist zwei von einer Stirnwand 2 nach vorne ragende und zueinander parallele Motorträger 3 auf, die im Bereich einer Vorderachse durch einen Vorderachsträger 4 miteinander verbunden sind. An den Motorträgern 3 stützt sich ebenfalls im Bereich der Vorderachse jeweils ein Federdom 5 ab. Zwischen den Federdomen 5 und einem Abschnitt einer A-Säule 6 erstreckt sich jeweils ein seitlicher Stützträger 7. Die beiden A-Säulen 6 sind zur Versteifung der Karosserie mit einem Querträger 8 miteinander verbunden. Der Querträger 8 bildet zugleich einen unteren Windlauf und eine Klebefläche zur Befestigung einer Windschutzscheibe. An den Vorderbau 1 schließt sich die Fahrgastzelle der Karosserie an. Diese wird seitlich im unteren Bereich durch jeweils einen Schweller 9 begrenzt, der sich bis zu einem vorderen Radhaus 10 erstreckt.

Zur Versteifung der Karosserie sind mehrere Zug-Druckstreben 11, 12 und 13 aus metallischen Rohren vorgesehen. So erstreckt sich zwischen dem vorderen Endabschnitt der Schweller 9 und dem mittleren Bereich des Vorderachsträgers 4 jeweils eine Zug-Druckstrebe 11. Auch zwischen dem vorderen Ende der Stützträger 7 im Bereich der Federdome 5 und dem mittleren Bereich des Vorderachsträgers 4 erstreckt sich jeweils eine Zug-Druckstrebe 12. Die beiden Zug-Druckstreben 12 verlaufen vor einem im Vorderbau 1 eingebauten Motor. Die Stützträger 7 wiederum stützen sich im Bereich der Federdome 5 jeweils über eine Zug-Druckstrebe 13 am mittleren Bereich des Querträgers 8 ab. Alle Zug-Druckstreben 11, 12 und 13 sind jeweils mit einem steifen Halter an das jeweilige Bauteil angebunden.

Die Zug-Druckstreben 11, 12 und 13 tragen erheblich dazu bei, die Steifigkeit des Vorderbaus 1 der Karosserie zu erhöhen. Der steifere Vorderbau 1 verbessert die dynamischen Fahreigenschaften des Cabrios spürbar. Die Belastungen der Motorträger 3, und der seitlichen Stützträger 7 reduzieren sich, sodass diese und die Knoten zu ihrer Anbindung so gestaltet werden können, dass ihr Gewicht geringer ist.

Die beiden Zug-Druckstreben 11 zwischen dem Schweller 9 und dem Vorderachsträger 4 sind zusätzlich im mittleren Bereich 14 jeweils mit dem Motorträger 3 verschraubt. Auch die beiden Zug-Druckstreben 12 zwischen dem Vorderachsträger 4 und den Stützträgern 5 sind jeweils im mittleren Bereich 15 mit dem Motorträger 3 verschraubt.

Zusätzlich kann der Vorderbau 1 optional noch durch eine Zug-Druckstrebe 16 versteift werden, die sich zwischen den Bereichen der beiden Federdome 5 erstreckt. Ferner kann sich zwischen den vorderen Endabschnitten der beiden Schweller 9 eine zusätzliche Zug-Druckstrebe 17 erstrecken. Diese beiden Zug-Druckstreben 16 und 17 tragen zu einer weiteren Versteifung des Vorderbaus 1 bei.

## Patentansprüche

1. Fahrzeugkarosserie, mit seitlichen Schwellern (9) und einem Vorderbau (1) mit zumindest zwei Motorträgern (3) zwischen denen ein Vorderachsträger (4) angebracht ist, und mit zumindest seitlichen Stützträgern (7) und einem Querträger (8), der im Bereich einer Stirnwand (2) angeordnet ist, wobei sich zwischen den vorderen Endabschnitten der beiden Schweller (9) und dem mittleren Bereich des Vorderachsträgers (4) jeweils eine Zug-Druckstrebe (11) erstreckt, **dadurch gekennzeichnet, dass** sich jeweils zwischen dem Stützträger (7) im Bereich eines Federdomes (5) und dem mittleren Bereich des Querträgers (8) eine Zug-Druckstrebe (13) erstreckt.

2. Fahrzeugkarosserie nach Anspruch 1, **dadurch gekennzeichnet, dass** sich jeweils zwischen den Stützträgern (7) im Bereich eines Federdomes (5) und dem mittleren Bereich des Vorderachsträgers (4) eine Zug-Druckstrebe (12) erstreckt.

3. Fahrzeugkarosserie, mit seitlichen Schwellern (9) und einem Vorderbau (1), der einen Motor aufnimmt, **dadurch gekennzeichnet, dass** jeweils vom vorderen Ende eines Stützträgers (7) im Bereich eines Federdomes (5) und jeweils von den vorderen Endabschnitten der Schweller (9) eine Zug-Druckstrebe (11, 12) zu einem gemeinsamen Knotenpunkt hin verläuft, der mittig im Bereich vor dem Motor angeordnet ist.

4. Fahrzeugkarosserie nach einem der vorhergehenden Ansprüche, **dadurch gekennzeichnet, dass** sich zwischen den beiden Bereichen der Federdome (5) eine Zug-Druckstrebe (16) erstreckt.

5. Fahrzeugkarosserie nach einem der vorhergehenden Ansprüche, **dadurch gekennzeichnet, dass** sich zwischen den vorderen Endabschnitten der beiden Schweller (9) eine Zug-Druckstrebe (17) erstreckt.

6. Fahrzeugkarosserie nach einem der vorhergehenden Ansprüche, **dadurch gekennzeichnet, dass** zumindest eine der beiden Zug-Druckstreben (11) zwischen Schweller (9) und Vorderachsträger (4) zusätzlich am Motorträger (3) befestigt ist.

7. Fahrzeugkarosserie nach einem der vorhergehenden Ansprüche, **dadurch gekennzeichnet, dass** zumindest eine der beiden Zug-Druckstreben (12) zwischen Stützträger (7) und Vorderachsträger (4) zusätzlich am Motorträger (3) befestigt ist.

8. Fahrzeugkarosserie nach einem der vorhergehenden Ansprüche, **dadurch gekennzeichnet, dass** die Zug-Druckstreben (11, 12, 13) mit steifen Haltern an das jeweilige Bauteil angebunden sind.

## Claims

1. A vehicle body, with lateral beams (9) and a front assembly (1) with at least two engine carriers (3), between which a front axle carrier (4) is attached, and with at least lateral support carriers (7) and a crossmember (8), which is arranged in the region of an end wall (2), a tension strut (11) extending in each case between the front end portions of the two beams (9) and the central region of the front axle carrier (4), **characterised in that** a tension strut (13) extends, in each case, between the support carrier (7) in the region of a spring dome (5) and the central region of the crossmember (8).

2. A vehicle body according to claim 1, **characterised in that** a tension strut (12) extends, in each case, between the support carriers (7) in the region of a spring dome (5) and a central region of the front axle carrier (4).

3. A vehicle body, with lateral beams (9) and a front assembly (1), which receives an engine, **characterised in that** a tension strut (11, 12) extends, in each case, from the front end of a support carrier (7) in the region of a spring dome (5) and, in each case, from the front end portions of the beams (9) to a common junction point, which is arranged centrally in the region in front of the engine.

4. A vehicle body according to any one of the preceding claims, **characterised in that** a tension strut (16) extends between the two regions of the spring domes (5).

5. A vehicle body according to any one of the preceding claims, **characterised in that** a tension strut (17) extends between the front end portions of the two beams (9).

6. A vehicle body according to any one of the preceding claims, **characterised in that** at least one of the two tension struts (11) is additionally fastened to the engine carrier (3) between the beam (9) and the front axle carrier (4).

7. A vehicle body according to any one of the preceding claims, **characterised in that** at least one of the two tension struts (12) is additionally fastened to the engine carrier (3) between the support carrier (7) and the front axle carrier (4).

8. A vehicle body according to any one of the preceding claims, **characterised in that** the tension struts (11, 12, 13) are connected to the respective component by rigid holders.

## Revendications

1. Carrosserie de véhicule automobile comportant des seuils de porte (9), latéraux et une avancée (1) avec au moins deux poutres de support de moteur (3) entre lesquelles est installée une poutre d'essieu avant (4) et au moins des poutres latérales d'appui (7) et une traverse (8) au niveau de la paroi frontale (2),
une entretoise de traction-compression (11) s'étendant chaque fois entre les segments d'extrémité avant des deux seuils de porte (9) et la zone médiane de la poutre d'essieu avant (4),
carrosserie **caractérisée par**
une entretoise de compression et de traction (13), chaque fois entre la poutre d'appui (7) au niveau d'un dôme de ressort (5) et la zone médiane de la traverse (8).

2. Carrosserie de véhicule automobile selon la revendication 1,
**caractérisée par**
chaque fois une entretoise de traction-compression (12), dans la zone d'un dôme de ressort (5) et dans la zone médiane de la poutre d'essieu avant (4), entre les poutres de support (7).

3. Carrosserie de véhicule automobile comportant des seuils de porte latéraux (9) et une avancée (1) recevant un moteur,
**caractérisée en ce qu'**
une entretoise de traction-compression (11, 12) rejoint un point formant un noeud commun respectivement à partir de l'extrémité avant d'une poutre de support (7) dans la zone d'un dôme de ressort (5) et de chacun des segments d'extrémité avant des seuils de porte (9), ce noeud se trouvant au milieu dans la zone avant du moteur.

4. Carrosserie de véhicule automobile selon l'une des revendications précédentes,
**caractérisée par**
une entretoise de traction-compression (16) s'étendant entre les deux zones des dômes de ressort (5).

5. Carrosserie de véhicule automobile selon l'une des revendications précédentes,
**caractérisée par**
une entretoise de traction-compression (17) s'étendant entre les segments d'extrémité avant des deux seuils de porte (9).

6. Carrosserie de véhicule automobile selon l'une des revendications précédentes,
**caractérisée en ce qu'**
au moins l'une des deux entretoises de traction-compression (11) est fixée entre un seuil de porte (9) et la poutre d'essieu avant (4), en plus à la poutre de support de moteur (3).

7. Carrosserie de véhicule automobile selon l'une des revendications précédentes,
**caractérisée en ce qu'**
au moins l'une des deux entretoises de traction-compression (12) est fixée à la poutre de support de moteur (3) en plus d'être fixée à la poutre d'appui (7) et à la poutre d'essieu avant (4).

8. Carrosserie de véhicule automobile selon l'une des revendications précédentes,
**caractérisée en ce que**
les entretoises de traction-compression (11, 12, 13) sont reliées par des supports rigides à chaque composant respectif.
